(19) Europäisches Patentamt

European Patent Office

Office européen des brevets

(11) Numéro de publication: **0 055 162**
**B1**

(12) **FASCICULE DE BREVET EUROPEEN**

(45) Date de publication du fascicule du brevet:
03.10.84

(21) Numéro de dépôt: **81401951.9**

(22) Date de dépôt: **08.12.81**

(51) Int. Cl.³: **F 16 H 7/08**

(54) Dispositif de tension et de guidage pour chaîne ou courroie sans fin.

(30) Priorité: **19.12.80 FR 8027026**

(43) Date de publication de la demande:
**30.06.82 Bulletin 82/26**

(45) Mention de la délivrance du brevet:
**03.10.84 Bulletin 84/40**

(84) Etats contractants désignés:
**DE GB IT**

(56) Documents cités:
**DE - A - 1 575 619**
**FR - A - 1 358 841**
**FR - A - 2 373 001**
**GB - A - 597 043**
**US - A - 2 963 918**
**US - A - 3 295 383**
**US - A - 3 931 745**

(73) Titulaire: **COMPAGNIE DES TRANSMISSIONS MECANIQUES SEDIS Société dite:, 102 Rue Danton, F-92306 Levallois Perret (FR)**

(72) Inventeur: **Kohler, Bernard, 45, Allée de la Forêt, F-78170 La Celle St Cloud (FR)**

(74) Mandataire: **Moncheny, Michel et al, c/o Cabinet Lavoix 2 Place d'Estienne d'Orves, F-75441 Paris Cedex 09 (FR)**

ACTORUM AG

## Description

La présente invention concerne un dispositif mécanique de tension et de guidage pour un élément de transmission tel qu'une chaîne ou une courroie sans fin, utilisé en particulier dans les commandes de distribution du moteur à combustion interne.

Dans les transmissions de mouvement par chaîne ou courroie, la forme polygonale des gorges des roues et pignons provoque des oscillations longitudinales et transversales de la chaîne ou courroie réagissant élastiquement. Dans le cas où le couple moteur et/ou le couple récepteur de la transmission ont les valeurs variant de façon instantanée, comme cela se présente en particulier dans les commandes de distribution des moteurs à combustion interne, les oscillations des brins peuvent être encore amplifiées, ce qui provoque l'usure prématurée des articulations de la chaîne et/ou la rupture de ses rouleaux, ou accroît les contraintes de fatigue en flexion de la courroie.

Sur le brin mou de la transmission, dans les réalisations classiques, un tendeur, s'il est judicieusement positionné et s'il prend appui sur une longueur suffisante de la chaîne ou courroie, contribue à étouffer les oscillations. Sur le brin tendu, on place généralement un ou plusieurs guides rigides, qui ne peuvent être appliqués efficacement contre les chaînes ou courroies en raisons des efforts transmis. Une telle réalisation est décrite dans le brevet GB-A-597 043, dans lequel un élément élastique de guidage est disposé autour de l'axe d'un organe de transmission, à l'intérieur du trajet défini par la chaîne. L'une des branches de cet élément élastique est montée coulissante longitudinalement dans un support fixe qui s'étend dans la zone médiane entre le point de dégrènement de la roue menée et le point d'engrènement de la roue menante, tandis que la branche opposée de cet élément prend appui élastiquement et latéralement sur le brin non tendu de la chaîne.

Dans ce dispositif, l'élément élastique n'est pas en appui sur le brin tendu, mais uniquement sur le brin non tendu, et ce dans les limites du débattement possible de la branche correspondante de l'élément élastique.

De ce fait, en cas de relâchement du brin tendu corrélatif à une surtension du brin mou, ce dispositif n'est plus en mesure de supprimer les battements de la chaîne.

En d'autre termes, ce dispositif antérieur ne permet pas d'étouffer en toutes circonstances les oscillations de l'élément de transmission.

On connaît également par le brevet numéro FR-A-1 358 841 un dispositif de tension et de guidage pour chaîne ou courroie sans fin de transmission du type considéré, comportant un organe élastique constitué d'un ressort à lame. Ce ressort prend appui par l'une de ses branches sur le brin mou non tendu, tendis que son autre branche est montée sur un support fixe, la branche appliquée sur le brin non tendu coopérant avec un dispositif anti-retour qui accompagne le déplacement de cette branche dans un sens, lorsque la flèche du brin mou s'accroît, et interdit tout retour en sens inverse de cette extrémité en cas de surtension du brin mou.

Un tel dispositif ne donne pas satisfaction, car plus encore que dans la réalisation antérieure précitée, les battements du brin tendu ne sont ici délimités par aucune partie du dispositif.

L'invention a pour but de proposer un dispositif ne présentant pas cet inconvénient.

A cet effet, l'invention a pour objet un dispositif de tension et de guidage pour un élément de transmission tel qu'une chaîne ou courroie sans fin passant sur une roue menante et une roue menée et destiné, en particulier, à la commande de distribution des moteurs à combustion interne, comportant un organe élastique à deux branches dont l'une prend appui contre le brin mou de l'élément, et l'extrémité de cette branche coopère avec un dispositif anti-retour accompagnant le déplacement de ladite extrémité dans un sens lorsque la flèche du brin mou s'accroît, et interdisant tout retour en sens inverse de cette extrémité en cas de surtension du brin mou, caractérisé en ce que l'organe élastique est fixé par l'extrémité de l'une de ses branches sur un support fixe au voisinage du dégrènement de la roue menée et cette même branche prend appui contre le brin tendu de l'élément de transmission.

Dans ces conditions, ce dispositif assure simultanément la tension du brin mou et le guidage du brin tendu sur lequel s'applique la seconde branche du ressort, de telle manière que le guidage du brin tendu et la tension du brin mou coopèrent et réagissent l'un sur l'autre pour obtenir une efficacité aussi parfaite que possible dans l'amortissement des oscillations des brins de l'élément de transmission, et ce tout en maintenant la tension constante quelle que soit l'usure ou l'allongement de cet élément de transmission.

En effet, en cas de surtension du brin mou susceptible d'entraîner un relâchement consécutif du brin tendu, la branche élastique appliquée sur ce brin tendu induit sur celui-ci une poussée qui s'oppose à ce relâchement.

D'autres particularités et avantages de l'invention apparaîtront au cours de la description qui va suivre faite en référence au dessin annexé donné titre d'exemple non limitatif:

la fig. 1 est une vue en plan d'une transmission par chaîne ou courroie équipée d'un dispositif de guidage et de tension selon l'invention;

la fig. 2 est une vue partielle en perspective montrant le point d'articulation de l'élément élastique côté dégrènement de la roue menée de la transmission à chaîne ou courroie;

la fig. 3 est une vue en coupe montrant la réalisation d'un dispositif anti-retour pour l'élément élastique, et

la fig. 4 est une vue d'une transmission par chaîne ou courroie à grand entraxe équipée d'une variante du dispositif de guidage et de tension selon l'invention.

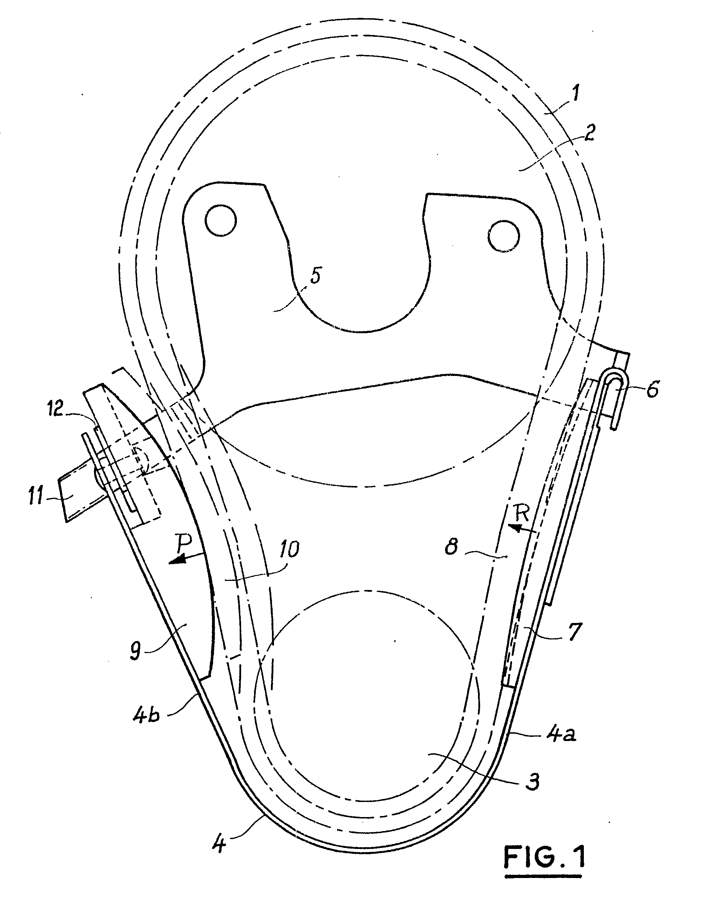

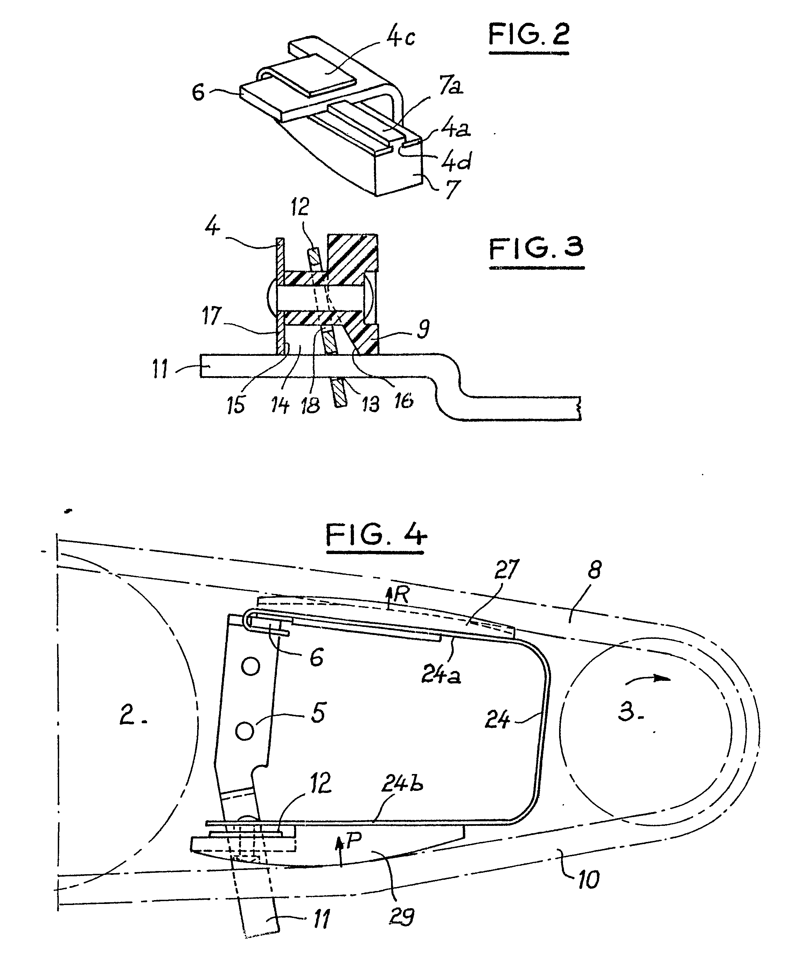

En se reportant à la fig. 1, une chaîne ou courroie sans fin 1 passe sur une roue menée 2 et sur une roue menante 3. Selon un mode de réalisation préféré mais non limitatif de l'invention représenté aux figs. 1, 2 et 3, un élément élastique constitué par une lame de ressort 4 à deux branches, qui peut être simple ou multiple, est articulé par l'extrémité de l'une de ses branches 4a sur une extrémité repliée (6) d'un support 5 au voisinage du dégrènement de la roue menée 2 et contourne la roue menante 3. Une rampe 7 fixée sur la branche 4a de la lame 4 prend appui extérieurement contre le brin tendu 8 de la courroie ou chaîne 1 et constitue ainsi pour celle-ci une rampe de guidage. Comme représenté à la fig. 2, l'extrémité 4c de la branche 4a est repliée sur elle-mme par dessus l'extrémité 6 du support 5. D'une façon avantageuse, une fente 4d est ménagée dans une partie d'extrémité de la branche 4a et la rampe 7 comporte un tenon 7a engagé dans la fente 4d et qui la maintient sur la branche 4a. De même, une rampe 9 fixée sur la branche 4b de la lame 4 prend appui extérieurement contre le brin mou 10 de la chaîne ou courroie 1 et constitue pour celle-ci une rampe de tension. Les rampes 7 et 9 sont réalisées en un matériau anti-friction apte à résister au frottement des brins 8 et 10.

Le support 5 peut avoir une forme quelconque appropriée mais comporte une partie allongée qui s'étend à peu près transversalement aux deux brins 8 et 10 de la chaîne ou de la courroie et au delà de ces brins.

L'extrémité opposée du support 5 est relativement plus longue que l'extrémité 6 et constitue un organe de guidage 11 qui coopère avec une plaquette 12 montée sur la rampe 9.

La rampe 9 présente une surface incurvée, convexe, de contact avec le brin 10 de la chaîne ou courroie de transmission, et est fixée par sa surface opposée, à peu près plane, à la branche 4b de la lame 4. Une extrémité de la rampe 9 présente une partie amincie délimitant un intervalle 14 avec la branche 4a de la lame qui est maintenue espacée de la rampe par un téton 17 formant entretoise et qui s'étend avec jeu à travers une ouverture 18 de la plaquette 12, de telle sorte que celle-ci peut osciller sur le téton 17 en prenant une position oblique par rapport à la direction longitudinale de l'organe de guidage 11 dans l'intervalle 14 grâce à une partie 16 de la rampe 9 qui est coupée en dépouille.

La plaquette 12 s'étend au-delà du bord inférieur de la rampe 9 et de la branche 4a et sa partie en saillie comporte une seconde ouverture 13 qui est engagée de façon à coulisser sur l'organe de guidage 11.

Ainsi en fonctionnement, la plaquette 12 assure un appui mobile à la rampe 9 pouvant avancer sous la poussée de la lame de ressort 4 lorsque la flèche du brin mou 10 s'accroît permettant ainsi de compenser l'usure de la chaîne ou courroie 1 en cours d'utilisation. Par contre l'appui incliné du flanc 16 de la rampe 9 contre la plaquette 12 provoque son arc-boutement sur l'organe de guidage 11, ce qui interdit tout recul de la plaquette s'il se produit une surtension sur le brin mou 10.

En outre, on constate que la poussée «P» sur la rampe 9 résultant d'une surtension du brin mou 10 induit, en raison de l'appui de la rampe 9 la plaquette 12, une poussée, «R» de la rampe 7 sur le brin tendu 8, s'opposant au relâchement et au fouettement du brin tendu corrélatif à la surtension du brin mou.

Enfin, la fig. 4 représente un autre mode re réalisation du dispositif de tension et de guidage suivant l'invention plus particulièrement adapté au cas où l'entraxe des roues menée 2 et menante 3 est important. Dans cet exemple, la lame 4 portant les rampes 27 et 29 faisant office de guide et de tendeur respectivement est disposée entre le brin tendu et le brin mou au lieu d'entourer la roue menante 3. Le dispositif anti-retour est constitué, comme dans l'exemple précédent, d'une plaquette 22 prise entre la lame 24 et la rampe 29. Ce mode de réalisation fonctionne de façon similaire à celui de la fig. 1.

Il ressort de la description qui précède que le dispositif de tension suivant l'invention est particulièrement simple du point de vue de sa réalisation, tout en présentant un fonctionnement plus efficace que les dispositifs de la technique antérieure.

## Revendications

1. Dispositif de tension et de guidage pour un élément de transmission (1) tel qu'une chaîne ou courroie sans fin passant sur une roue menante (3) et une roue menée (2) et destiné, en particulier, à la commande de distribution des moteurs à combustion interne, comportant un organe élastique (4, 24) à deux branches (4a, 4b) dont l'une (4b) prend appui contre le brin mou (10) de l'élément (1), et l'extrémité de cette branche (4b) coopère avec un dispositif anti-retour (11, 12) accompagnant le déplacement de ladite extrémité dans un sens lorsque la flèche du brin mou (10) s'accroît, et interdisant tout retour en sens inverse de cette extrémité en cas de surtension du brin mou, caractérisé en ce que l'organe élastique (4, 24) est fixé par l'extrémité de l'une (4a, 24a) de ses branches sur un support (5) fixe au voisinage du dégrènement de la roue menée (2) et cette même branche (4a) prend appui contre le brin tendu de l'élément (1) de transmission.

2. Dispositif selon la revendication 1, caractérisé en ce que l'organe élastique (4, 24) est disposé éxtérieurement à l'élément de transmission (1) autour de la roue menante (3).

3. Dispositif selon la revendication 1, caractérisé en ce que l'organe élastique (24) est disposé entre les brins tendu (8) et mou (10) de l'élément de transmission.

## Claims

1. A tensioning and guiding device for a transmission element (1) such as an endless chain or belt extending around a driving wheel (2) and a driven wheel (3) and adapted, in particular, to the timing gear of internal combustion engines, comprising a resiliently yieldable element (4, 24) having two branches (4a, 4b) of which one (4b) bears against the slack portion (10) of the element (1), the end of this branch (4b) cooperating with an anti-return device (11, 12) which accompanies the displacement of said end in one direction when the deflection of the slack portion (10) increases, and prevents any return in the opposite direction of this end in the case of overtensioning of the slack portion, characterised in that the resiliently yieldable element (4, 24) is fixed by the end of one (4a, 24a) of its branches on a fixed support (5) in the vicinity of the disengagement of the element (1) from the driven wheel (2) and this same branch (4a) bears against the taut portion of the transmission element (1).

2. A device according to claim 1, characterised in that the resiliently yieldable element (4, 24) is disposed on the outside of the transmission element (1) around the driving wheel (3).

3. A device according to claim 1, characterised in that the resiliently yieldable element (24) is disposed between the taut portion (8) and the slack portion (10) of the transmission element.

**Patentansprüche**

1. Vorrichtung zum Spannen und Führen für ein Transmissionselement (1), wie eine endlose Kette oder einen endlosen Riemen, das über ein treibendes Rad (3) und ein angetriebenes Rad (2) läuft, insbesondere für die Steuerung eines Innenbrennkraftmotors, mit einem elastischen Teil (4, 24) mit zwei Schenkeln (4a, 4b), von denen der eine (4b) am lockeren Trumm (10) des Elements (1) anliegt und das Ende dieses Schenkels (4b) mit einem Gesperre (11, 12) zusammenwirkt, das die Verlagerung des Endes in einem Sinne, bei dem die Durchbiegung des lockeren Trumms (10) zunimmt, mitmacht, und jegliche Rückkehr dieses Endes in umgekehrter Richtung im Fall der Überspannung des lockeren Trumms (10) verhindert, dadurch gekennzeichnet, dass das elastische Teil (4, 24) durch das Ende eines (4a, 24a) seiner Schenkel an einem Träger (5) befestigt ist, der in der Nähe des Endes des Eingriffes des angetriebenen Rades (2) befestigt ist, und dass dieser Schenkel (4a) am gespannten Trumm des Transmissionselements (1) anliegt.

2. Vorrichtung nach Anspruch 1, dadurch gekennzeichnet, dass das elastische Teil (4, 24) aussen am Transmissionselement (1) um das treibende Rad (3) herum angeordnet ist.

3. Vorrichtung nach Anspruch 1, dadurch gekennzeichnet, dass das elastische Teil (24) zwischen den gespannten (8) und lockeren (10) Trumm des Transmissionselements angeordnet ist.

FIG.1

FIG. 2

FIG. 3

FIG. 4